# EUROPÄISCHE PATENTSCHRIFT

(11) **EP 3 018 015 B1**
(45) Veröffentlichungstag und Bekanntmachung des Hinweises auf die Patenterteilung: **01.11.2017**
(21) Anmeldenummer: 15003150.8
(22) Anmeldetag: 03.11.2015
(51) Int. Cl.: B60R 21/237, B60R 21/232, B60R 21/217

(54) **GASSACKMODUL, INSBESONDERE FÜR EINEN VORHANGAIRBAG, GASSACK FÜR EIN GASSACKMODUL UND FAHRZEUGINSASSENRÜCKHALTESYSTEM**
AIRBAG MODULE, IN PARTICULAR FOR CURTAIN AIR BAG, AIRBAG FOR AN AIR BAG MODULE AND VEHICLE OCCUPANT RESTRAINT SYSTEM
MODULE DE SAC CONTENANT DU GAZ, EN PARTICULIER POUR UN AIRBAG RIDEAU, SAC CONTENANT DU GAZ POUR UN MODULE DE SAC CONTENANT DU GAZ ET SYSTEME DE RETENUE DE PASSAGER DE VEHICULE

(30) Priorität: 04.11.2014 DE 202014008687 U
(43) Veröffentlichungstag der Anmeldung: 11.05.2016
(73) Patentinhaber: Dalphi Metal España, S.A., 36213 Vigo (ES)
(72) Erfinder: Sánchez Rodríguez, Ester, 36380 Gondomar (ES); Prego Domínnguez, Miguel, 36214 Vigo (ES); Izquierdo Salgueiro, Salvador, 36210 Vigo (ES)
(74) Vertreter: ZF TRW Patentabteilung

(56) Entgegenhaltungen:
- WO-A1-02/079008
- DE-A1-102004 023 853
- FR-A1- 2 855 125
- US-A1- 2008 258 442

## Beschreibung

Die Erfindung betrifft ein Gassackmodul, insbesondere für einen Vorhangairbag, umfassend einen Gasgenerator und einen Gassack, wobei der Gassack einen Umschlingungsabschnitt, der den Gasgenerator umschlingt, einen zu einem Faltpaket gefalteten Entfaltungsabschnitt und einen Verbindungsabschnitt, der zwischen dem Umschlingungsabschnitt und dem Entfaltungsabschnitt angeordnet ist, umfasst. Dabei ist der Verbindungsabschnitt bei vertikaler Betrachtung im Einbauzustand des Gassackmoduls zumindest abschnittsweise seitlich des Faltpakets angeordnet ist. Daneben betrifft die Erfindung einen Gassack eines solchen Gassackmoduls

Die gattungsgemäße DE 10 2004 023 853 A1 zeigt ein Gassackmodul für eine Heckkollision, welches einen Insassen in einem Rücksitz eines Fahrzeugs bei einem Aufprall auf einen rückwärtigen Abschnitt des Fahrzeugs schützen soll, sowie ein spezielles Faltverfahren für einen Gassack eines solchen Gassackmoduls. Durch die spezielle Faltung des Gassacks soll eine verbesserte Aufnahmefähigkeit im Fahrzeug sowie eine höhere Entfaltungsstabilität beim Aufblasen des Gassacks erreicht werden.

In der FR 2 855 125 A1 ist ein Vorhang-Gassack eines Gassackmoduls offenbart, der eine Anschlussöffnung mit einem die Anschlussöffnung umgebenden Anschlussflansch aufweist, wobei der Anschlussflansch mit einem Gasführungsrohr eines Gasgenerators verbunden ist

Aus dem Stand der Technik sind sogenannte Vorhangairbags bzw. Curtain-Airbags bekannt, die bei einem Seitenaufprall Schutz für die Fahrzeuginsassen bieten. Diesbezüglich ist unter dem Fahrzeughimmel überhalb der Seitenscheiben auf der linken und rechten Fahrzeugseite jeweils mindestens ein Gasgenerator mit einem Gassack verbaut, so dass im Aktivierungsfall auf der gesamten Länge der Seitenscheiben ein Gassack entfaltet werden kann. Abhängig vom Fahrzeugtyp kann es jedoch zu Bauraum-Problemen hinsichtlich der Anordnung des Gasgenerators sowie des Gassackes zueinander kommen. Bei der Anordnung des Gasgenerators und des Gassackes ist zum einen darauf zu achten, dass sich der Gassack schnellstmöglich in allen Abschnitten entfalten kann. Außerdem muss ein Gassackmodul oftmals in die von Fahrzeugherstellern vorgesehenen Bereiche zwischen Fahrgestell und Fahrzeughimmel eingebracht werden, sodass die Bauraum-Höhe vorgegeben ist.

Die Aufgabe der vorliegenden Erfindung ist es, ein Gassackmodul anzugeben, das hinsichtlich der benötigten Bauraum-Höhe optimiert ist. Des Weiteren soll ein weiterentwickelter Gassack angegeben werden, der insbesondere im Zusammenhang mit einem hinsichtlich der Bauraum-Höhe optimierten Gassackmodul verbaut wird. Ferner besteht die Aufgabe darin, ein Fahrzeuginsassenrückhaltesystem, insbesondere einen Vorhangairbag, mit einem weiterentwickelten Gassackmodul und/oder einem weiterentwickelten Gassack anzugeben.

Erfindungsgemäß wird diese Aufgabe durch den Gegenstand des Patentanspruches 1 gelöst.

Vorteilhafte und zweckmäßige Ausgestaltungen des erfindungsgemäßen Gassackmoduls sind in den Unteransprüchen angegeben.

Das erfindungsgemäße Gassackmodul, das insbesondere für einen Vorhangairbag konstruiert ist, umfasst einen Gasgenerator und einen Gassack, wobei der Gassack einen Umschlingungsabschnitt, der den Gasgenerator umschlingt, einen zu einem Faltpaket gefalteten Entfaltungsabschnitt und einen Verbindungsabschnitt, der zwischen dem Umschlingungsabschnitt und dem Entfaltungsabschnitt angeordnet ist, umfasst. Bei vertikaler Betrachtung im Einbauzustand des Gassackmoduls liegt der Umschlingungsabschnitt erfindungsgemäß direkt oder indirekt auf dem Faltpaket auf, wobei der Verbindungsabschnitt zumindest abschnittsweise seitlich des Faltpakets angeordnet ist.

Der Gasgenerator eines Gassackmoduls für Vorhangairbags weist meist eine längliche, zylinderförmige Bauform auf. Um einen derartigen Gasgenerator ist ein erster Abschnitt eines Gassacks umschlungen. Der Umschlingungsabschnitt umfasst die obere Kante eines Gassacks. Vorzugsweise wird der längliche Gasgenerator vollständig am äußeren Zylinderumfang vom Gassack, nämlich dem Umschlingungsabschnitt des Gassacks umschlungen.

Der Entfaltungsabschnitt eines Gassacks ist der Abschnitt, der im Aktivierungsfall entlang der Seitenscheiben entfaltet wird und durch einströmendes Gas ein Gaskissen bildet, das die Fahrzeuginsassen vor seitlich auf das Fahrzeug einwirkenden Kräften schützt.

Der Entfaltungsabschnitt ist vorzugsweise über die gesamte Länge hinsichtlich der Höhe des Entfaltungsabschnittes gefaltet. Die Länge des Entfaltungsabschnittes wird im eingebauten Zustand durch die Länge des entfalteten Gassacks gebildet. Die Höhe des Entfaltungsäbschnitts wird im eingebauten Zustand durch die vertikale Erstreckung des Gassacks ausgehend vom Fahrzeughimmel bis hin zu den Unterkanten der Seitenscheiben gebildet. Der Gassack wird im Entfaltungsabschnitt hinsichtlich der Höhe komprimiert. Dies erfolgt durch Falten des Entfaltungsabschnittes zu einem Faltpaket. Ein derartiges Faltpaket kann folglich zwischen einem Fahrzeughimmel und dem Fahrzeugdach montiert werden.

Bei dem Verbindungsabschnitt des Gassacks handelt es sich um das Zwischenstück zwischen Umschlingungsabschnitt und Entfaltungsabschnitt. Mit anderen Worten wird der Umschlingungsabschnitt mittels des Verbindungsabschnitts mit dem Entfaltungsabschnitt verbunden. Erfindungsgemäß ist es vorgesehen, dass der Umschlingungsabschnitt direkt oder indirekt auf dem Faltpaket aufliegt und der Verbindungsabschnitt im Querschnitt zumindest abschnittsweise seitlich des Faltpakets angeordnet ist. Sofern der Umschlingungsabschnitt direkt auf dem Faltpaket aufliegt, sind zwischen dem Faltpaket und dem Umschlingungsabschnitt keine weiteren Materiallagen angeordnet. Es ist aber auch denkbar, dass zwischen dem Umschlingungsabschnitt und dem Faltpaket beispielsweise noch eine Umhüllung des Faltpakets und/oder eine Übergangsfaltung angeordnet sind, so dass in diesem Fall der Umschlingungsabschnitt indirekt auf dem Faltpaket aufliegt.

In beiden Fällen ist der Verbindungsabschnitt im Querschnitt zumindest abschnittsweise seitlich des Faltpakets angeordnet. "Im Querschnitt" ist derart zu verstehen, dass die Anordnung aus Gasgenerator und Gassack im eingebauten Zustand vertikal geschnitten dargestellt ist. Bei einer derartigen Querschnittsbetrachtung ist der Verbindungsabschnitt seitlich des Faltpakets angeordnet. Der Verbindungsabschnitt liegt somit nicht, wie der Umschlingungsabschnitt, auf dem Faltpaket auf sondern wird seitlich des Faltpakets geführt bzw. angeordnet. Im Querschnitt bedeutet dies, dass der Verbindungsabschnitt links oder rechts des Faltpakets angeordnet ist, sofern eine vertikale Betrachtung im Einbauzustand vorgenommen wird.

Der Entfaltungsabschnitt ist in mehreren Faltlagen ausgehend von einer ersten Faltlage, die direkt oder indirekt mit dem Verbindungsabschnitt verbunden ist, gefaltet, insbesondere zickzack-gefaltet. Bei einer vertikalen Betrachtung im Querschnitt ist die erste Faltlage die oberste Faltlage des Faltpakets. Sofern die erste bzw. oberste Faltlage direkt mit dem Verbindungsabschnitt verbunden ist, befindet sich zwischen der ersten Faltlage und dem Verbindungsabschnitt keine weitere Faltung bzw. kein weiteres Material. Bei einer indirekten Verbindung der ersten bzw. obersten Faltlage mit dem Verbindungsabschnitt ist beispielsweise eine Übergangs- bzw. Zwischenfaltung vorgesehen, die nicht zum Faltpaket zählt.

Im Querschnitt schließen die erste bzw. oberste Faltlage des Entfaltungsabschnitts und der Verbindungsabschnitt einen Winkel von 90° - 180°, insbesondere von 95° - 175°, ein. Eine derartige Anordnung der ersten Faltlage in Relation zum Verbindungsabschnitt ergibt sich aufgrund der seitlichen Anordnung des Verbindungsabschnitts im Querschnitt zum Faltpaket.

Da der Umschlingungsabschnitt direkt oder indirekt auf dem Faltpaket aufliegt und der Verbindungsabschnitt seitlich des Faltpakets angeordnet ist, ist kein Zwischenraum bzw. kein Abstand zwischen dem Umschlingungsabschnitt und dem Faltpaket notwendig, so dass das erfindungsgemäße Gassackmodul hinsichtlich des benötigten Bauraums minimiert ist.

In einer weiteren Ausführungsform der Erfindung sind die erste Faltlage bzw. oberste Faltlage des Entfaltungsabschnitts und der Verbindungsabschnitt im Querschnitt im Wesentlichen rechtwinklig zueinander angeordnet. Im Wesentlichen bedeutet dies, dass hierbei eine geringfügige Abweichung vom rechten Winkel denkbar ist. Außerdem ist es denkbar, dass der Verbindungsabschnitt und/oder die erste Faltlage aufgrund Verknickungen des Gassackmaterials nicht linear angeordnet ist, so dass sich für einzelne Abschnitte der ersten Faltlage und/oder des Verbindungsabschnitts verschiedene Winkel ergeben.

Die erste bzw. oberste Faltlage des Entfaltungsabschnitts kann indirekt mit einer Übergangsfaltung mit dem Verbindungsabschnitt verbunden sein. Die Übergangsfaltung verläuft demnach ausgehend vom Verbindungsabschnitt bis zur ersten Faltlage des Entfaltungsabschnitts. Die Übergangsfaltung kann eine oder mehrere Faltbiegungen mit einer oder mehreren Faltrichtungen aufweisen. Die Übergangsfaltung ist derart auszubilden, dass der Verbindungsabschnitt mit der ersten Faltlage des Entfaltungsabschnittes verbunden wird, wobei der Umschlingungsabschnitt auf dem Faltpaket direkt oder indirekt aufliegt.

Das erfindungsgemäße Gassackmodul kann eine Befestigungsklammer aufweisen, die im Umschlingungsabschnitt einen Gasgeneratorträger am Gassack klemmend befestigt. Ein Gasgeneratorträger ist vorzugsweise als längliches Blech ausgebildet, wobei dieses Blech im Querschnitt eine Wölbung aufweist, wobei diese Wölbung in etwa der Umfangsform des Gasgenerators entspricht. An diesem länglichen Blech ist vorzugsweise ein Befestigungsflansch ausgebildet, mit dessen Hilfe der Gasgenerator über den Gasgeneratorträger am Fahrzeugrahmen befestigt werden kann.

Mit Hilfe einer Befestigungsklammer kann ein derartiger Gasgeneratorträger am Gassack klemmend befestigt werden, wobei auf den Umschlingungsabschnitt zunächst ein Gasgenerator positioniert wird, um diesen anschließend mit Hilfe einer Befestigungsklammer am Gassack klemmend zu befestigen.

Die Befestigungsklammer weist vorzugsweise zwei Flanschelemente auf, die im Verbindungsabschnitt den zwischen den Flanschelementen angeordneten Gassack mittels eines Befestigungselements, insbesondere einer Schraube oder einer Niete, klemmend befestigen. Mit anderen Worten weist die Befestigungsklammer ebenso wie der Gassack einen Umschlingungsabschnitt und einen Verbindungsabschnitt auf, wobei im Verbindungsabschnitt der Verbindungsabschnitt des Gassacks zwischen den Flanschelementen angeordnet ist und beispielsweise mittels einer Nietverbindung klemmend zwischen den beiden Flanschelementen befestigt wird.

Die Befestigungsklammer weist beispielsweise eine schellenartige Form auf, wobei die Schellenform den Umschlingungsabschnitt der Befestigungsklammer bildet und die an beiden Schellenenden vorgesehenen Flanschelemente den Verbindungsabschnitt bilden. Die Flanschelemente sind im Wesentlichen parallel zueinander angeordnet, so dass der Verbindungsabschnitt bzw. die Gassack-Lagen des Verbindungsabschnitts zwischen den Flanschelementen befestigt werden können. Die Flanschelemente verstärken bzw. versteifen den Gassack im Verbindungsabschnitt, so dass die Orientierung des Gassacks im Verbindungsabschnitt, insbesondere die seitlich des Faltpakets vorgesehene Anordnung des Verbindungsabschnitts, mit Hilfe der Flanschelemente realisiert ist.

Der zu einem Faltpaket gefaltete Entfaltungsabschnitt ist vorzugsweise in einer strumpfartigen Umhüllung angeordnet. Zur Verbindung des Entfaltungsabschnitts, insbesondere der ersten bzw. oberen Faltlage des Entfaltungsabschnitts mit dem Verbindungsabschnitt weist diese strumpfartige Umhüllung vorzugsweise eine Öffnung, insbesondere eine schlitzförmige Öffnung, auf.

In einem nebengeordneten Aspekt ist ein Gassackmodul vorgesehen, insbesondere für einen Vorhangairbag, wobei das Gassackmodul einen Gasgenerator und einen Gassack umfasst, wobei der Gassack einen Umschlingungsabschnitt, der den Gasgenerator umschlingt, einen zu einem Faltpaket gefalteten Entfaltungsabschnitt und einen Verbindungsabschnitt, der zwischen dem Umschlingungsabschnitt und dem Entfaltungsabschnitt angeordnet ist, umfasst. Bezüglich der einzelnen Abschnitte des Gassacks, insbesondere bezüglich des Umschlingungsabschnitts, des Verbindungsabschnitts und des Entfaltungsabschnitts wird auf die vorhergehenden Erläuterungen verwiesen.

Ein Gasgeneratorträger ist am Gassack im Umschlingungsabschnitt mittels einer Befestigungsklammer klemmend befestigt, wobei die Befestigungsklammer zwei Flanschelemente aufweist, die im Verbindungsabschnitt den zwischen den Flanschelementen angeordneten Gassack mittels eines Befestigungselements klemmend befestigen. Der Gasgeneratorträger ist im Querschnitt im Wesentlichen senkrecht zum Faltpaket angeordnet. Die Flanschelemente der Befestigungsklammer sind im Querschnitt schräg und seitlich zum Faltpaket angeordnet. Auch bezüglich des Gasgeneratorträgers, der Befestigungsklammer, sowie hinsichtlich der Flanschelemente und des Begriffes "im Querschnitt" gelten die vorhergehenden Erläuterungen.

Auch im Zusammenhang mit diesem nebengeordneten Aspekt ist es denkbar, dass der Entfaltungsabschnitt in mehreren Faltlagen, ausgehend von einer ersten bzw. oberen Faltlage, die direkt oder indirekt mit dem Verbindungsabschnitt verbunden ist, gefaltet, insbesondere zickzack-gefaltet, ist. Der Entfaltungsabschnitt bzw. der zu einem Faltpaket gefaltete Entfaltungsabschnitt kann in einer strumpfartigen Umhüllung angeordnet sein. Die erste Faltlage bzw. die oberste Faltlage des Entfaltungsabschnitts und der Verbindungsabschnitt können einen Winkel von 90° - 180°, insbesondere von 95° - 175°, einschließen.

Die erste bzw. oberste Faltlage des Entfaltungsabschnitts kann indirekt mit einer Übergangsfaltung mit dem Verbindungsabschnitt verbunden sein.

In einem weiteren nebengeordneten Aspekt ist ein Gassack eines oben beschriebenen Gassackmoduls vorgesehen, wobei der Gassack eine Oberkante und eine Unterkante umfasst. Die Oberkante umfasst ein erstes und ein zweites Ende, wobei das erste Ende der Oberkante Teil eines Umschlingungsabschnitts ist. Die Unterkante ist als Teil eines Entfaltungsabschnitts ausgebildet.

Beim Entfaltungsabschnitt handelt es sich um den Abschnitt eines Gassacks, der im aktivierten Zustand mit Gas gefüllt wird und ein Gaskissen zum Schutz von Fahrzeuginsassen bildet. Der Entfaltungsabschnitt wird im aktivierten Zustand ausgehend von einer Montageposition, die beispielsweise unterhalb eines Fahrzeughimmels ist, entlang der Seitenscheiben entfaltet. Der Umschlingungsabschnitt des Gassacks umschlingt einen Gasgenerator entlang der Außenumfangsfläche. Ein derartiger Gasgenerator weist vorzugsweise eine längliche Zylinderform auf, die im Umschlingungsabschnitt vom Gassack bedeckt ist. Erfindungsgemäß verlaufen die Oberkante und die Unterkante schräg zueinander.

Die Oberkante und die Unterkante verlaufen beispielsweise in einem Winkel von 3,0° - 15,0°, insbesondere von 7,0° - 10,0°, zueinander. Ein Gassack mit einer derartig schrägen Oberkante kann im Zusammenhang mit einem erfindungsgemäßen Gassackmodul montiert werden.

Die Unterkante des erfindungsgemäßen Gassacks ist vorzugsweise länger als die Oberkante, wobei zwischen der Oberkante und der Unterkante ein Absatzbereich mit einer parallel zur Unterkante ausgebildeten Absatzkante ausgebildet ist. Der Absatzbereich bewirkt, dass der Entfaltungsabschnitt hinsichtlich der Längserstreckung des Gassacks vergrößert wird. Der Übergangsbereich von der Oberkante zum Absatzbereich kann beispielsweise bogenförmig ausgebildet sein. Der bogenförmige Übergangsbereich kann in einer geradlinigen Absatzkante enden, wobei diese parallel zur Unterkante verläuft. Der Absatzbereich kann beidseits ausgebildet sein, d.h. sowohl ausgehend vom ersten Ende der Oberkante als auch ausgehend vom zweiten Ende der Oberkante kann jeweils ein Absatzbereich ausgebildet sein, wobei die beiden Absatzkanten vorzugsweise auf einer gemeinsamen Achse liegen.

Zwischen der Verlängerung der Absatzkante und der Oberkante ist vorzugsweise ein keilförmiger Flächenabschnitt mit zwei, die Verlängerung der Absatzkante und die Oberkante verbindenden Schrägen ausgebildet. Als Verlängerung der Absatzkante ist eine gedachte Linie zu verstehen, die die Absatzkante in Längsrichtung des Gassacks, insbesondere in Längsrichtung des Entfaltungsabschnitts bildet. Diese gedachte Verlängerung der Absatzkante wird an zwei Stellen mit der Oberkante verbunden. Insbesondere wird die Verlängerung der Absatzkante mit dem ersten Ende der Oberkante und des Weiteren mit dem zweiten Ende der Oberkante verbunden.

Eine erste Schräge verbindet die Verlängerung der Absatzkante und das erste Ende der Oberkante, wobei eine zweite Schräge die Verlängerung der Absatzkante und das zweite Ende der Oberkante verbindet. Die beiden Schrägen, die Oberkante sowie die Verlängerung der Absatzkante bilden einen keilförmigen Flächenabschnitt. Dieser keilförmige Flächenabschnitt ist im Rahmen des erfindungsgemäßen Gassackmoduls notwendig, um im Verbindungsbereich des Gassackmoduls eine derartige Anordnung verwirklichen zu können, dass der Verbindungsabschnitt im Querschnitt zumindest abschnittsweise seitlich des Faltpakets angeordnet ist. In diesem Bereich ist folglich mehr Gassackmaterial bzw. Gassackstoff notwendig als in dem Bereich der oberen Kante des Gassacks, der nicht mit dem Gasgenerator verbunden ist und folglich keinen Umschlingungsabschnitt sowie keinen Verbindungsabschnitt aufweist.

Die erste Schräge ist erfindungsgemäß länger als die zweite Schräge, so dass am ersten Ende der oberen Kante ein Umschlingungsabschnitt sowie in vertikaler Richtung darauffolgend ein Verbindungsabschnitt ausgebildet werden kann, wobei der Verbindungsabschnitt seitlich eines Faltpakets anzuordnen ist.

Die Erfindung wird im Folgenden anhand von Ausführungsbeispielen unter Bezugnahme auf die beigefügter, schematischen Zeichnungen näher erläutert. Weitere Merkmale und Vorteile der Erfindung ergeben sich aus der nachfolgenden Beschreibung in Verbindung mit diesen Zeichnungen. Darin zeigen:
Fig. 1: ein erfindungsgemäßes Gassackmodul im Querschnitt;
Fig. 2: eine weitere Ausführungsform eines erfindungsgemäßen Gassackmoduls mit Teilquerschnittdarstellung des Gassacks;
Fig. 3: ein erfindungsgemäßes Gassackmodul in einer perspektivischen Ansicht;
Fig. 4: die Verbindung eines Gasgenerators an einem Gassack; und
Fig. 5: einen erfindungsgemäßen Gassack.

Im Folgenden werden für gleiche und gleich wirkende Teile gleiche Bezugszeichen verwendet.

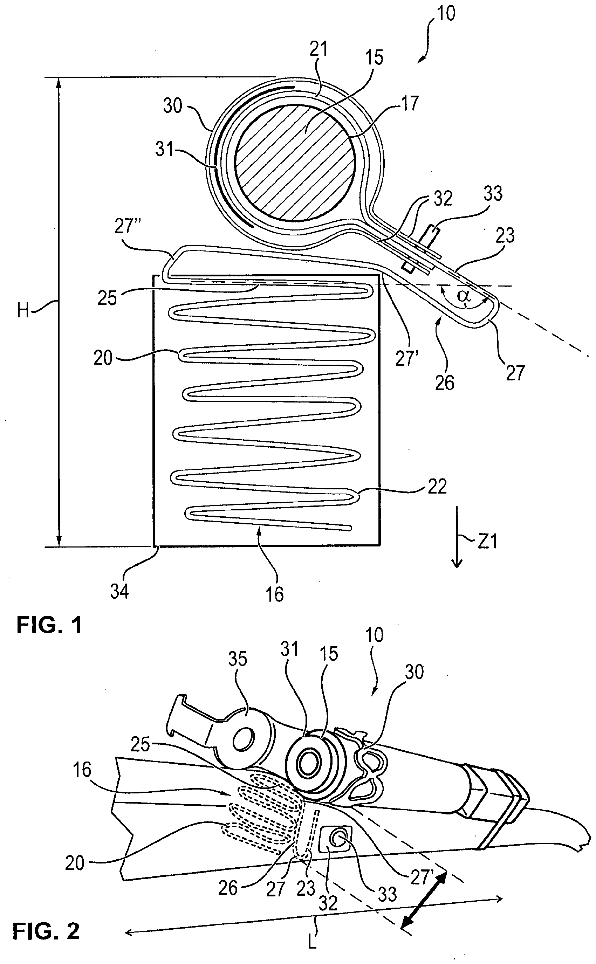

In Fig. 1 ist ein erfindungsgemäßes Gassackmodul im Querschnitt dargestellt. Fig. 1 zeigt somit ein Gassackmodul im nicht-aktivierten Zustand. Die EinbauSituation im Fahrzeug ist ähnlich der in Fig. 1 dargestellten Anordnung und Ausrichtung.

Das Gassackmodul 10, das insbesondere für einen Vorhangairbag verwendet werden kann, umfasst einen Gasgenerator 15 und einen Gassack 20, wobei der Gassack 20 einen Umschlingungsabschnitt 21, der den Gasgenerator 15 umschlingt, einen zu einem Faltpaket 16 gefalteten Entfaltungsabschnitt 22 und einen Verbindungsabschnitt 23, der zwischen dem Umschlingungsabschnitt 21 und dem Entfaltungsabschnitt 22 angeordnet ist, umfasst. Der Umschlingungsabschnitt 21 liegt indirekt auf dem Faltpaket 16 auf, wobei der Verbindungsabschnitt 23 im dargestellten Querschnitt seitlich des Faltpakets 16 angeordnet ist.

Der Gasgenerator 15 weist eine längliche Zylinderform auf, wobei in Fig. 1 der Querschnitt des Gasgenerators gezeigt wird. Der Umschlingungsabschnitt 21 umschlingt den Gasgenerator 15 auf der gesamten Umfangsfläche 17. Zwischen dem Umschlingungsabschnitt 21 und dem Faltpaket 16 ist kein Abstand bzw. kein Zwischenraum ausgebildet. Diese beiden Abschnitte bzw. Bereiche des erfindungsgemäßen Gassackmoduls 10 liegen somit aufeinander, wobei die beiden Elemente indirekt aufeinanderliegen, da dazwischen noch Teile des Gassacks befindlich sind.

Bei dem Entfaltungsabschnitt 22 handelt es sich um den Abschnitt des Gassacks 20, der im aktivierten Zustand entlang der Seitenscheiben entfaltet wird, und mit Hilfe eines einströmenden Gases ein Gaskissen zum Schutz der Fahrzeuginsassen bildet. Die Entfaltung des Entfaltungsabschnitts 22 erfolgt in Entfaltungsrichtung Z1. Das dargestellte Gassackmodul 10 kann in der dargestellten Art und Weise zwischen einem Fahrzeugdach und einem Fahrzeughimmel montiert werden.

Erfindungsgemäß ist der Verbindungsabschnitt 23 seitlich des Faltpakets 16 angeordnet. Die Einbauhöhe H des Gassackmoduls 10 wird demnach kompakt gestaltet. Im Vergleich zu Gassackmodulen des Standes der Technik ist die Einbauhöhe H derart verringert, dass das erfindungsgemäße Gassackmodul 10 unabhängig vom Fahrzeugtyp verbaut werden kann.

Der Entfaltungsabschnitt 22 ist im Faltpaket 16 in mehreren Faltlagen, ausgehend von einer ersten Faltlage 25, nämlich der obersten Faltlage, indirekt mit dem Verbindungsabschnitt 23 verbunden. Der Entfaltungsabschnitt 22 ist im dargestellten Beispiel zickzack-gefaltet.

Die erste Faltlage 25 und der Verbindungsabschnitt 23 schließen einen Winkel α von 95° - 175° ein. Im dargestellten Beispiel beträgt der Wert des Winkels α 145°. Die erste bzw. oberste Faltlage 25 des Entfaltungsabschnitts 22 ist indirekt mit einer Übergangsfaltung 26 mit dem Verbindungsabschnitt 23 verbunden. Die Übergangsfaltung 26 weist drei Faltbiegungen, nämlich die erste Faltbiegung 27, die daran anschließende zweite Faltbiegung 27' und eine letzte Faltbiegung 27" auf. Die erste Faltbiegung 27' wird in einer Faltrichtung, die entgegengesetzt zum Verlauf des Verbindungsabschnitts 23 gerichtet ist, gebildet. Daran schließt sich die zweite Faltbiegung 27' an, wobei diese durch Abwinkelung des Gassacks 10 in Faltrichtung um ca. 30° gebildet ist. Mit Hilfe der letzten Faltbiegung 27" wird die Verbindung zur ersten Faltlage 25 des Entfaltungsabschnitts 22 hergestellt. Es wird eine Faltbiegung 27" ausgebildet, die um 180° abgewinkelt ist.

Fig. 1 zeigt des Weiteren eine Befestigungsklammer 30, die im Umschlingungsabschnitt 21 einen Gasgeneratorträger 31 am Gassack 20 klemmend befestigt. Die Befestigungsklammer 30 weist im Umschlingungsabschnitt 21 eine schellenartige Form auf. Der Gasgeneratorträger 31 ist ein längliches Blech, das im dargestellten Querschnitt eine Wölbung aufweist, die in etwa der Umfangsfläche 17 des Gasgenerators 15 entspricht. Der Gasgeneratorträger 31 steht im Wesentlichen senkrecht auf dem Faltpaket 16.

Im Verbindungsabschnitt 23 weist die Befestigungsklammer 30 zwei Flanschelemente 32 auf, die im Verbindungsabschnitt 23 den zwischen den Flanschelementen 32 angeordneten Gassack 10 mittels eines Befestigungselements 33, wie z.B. eine Schraube oder einem Niet, klemmend befestigen.

Im Querschnitt ist der Gasgeneratorträger 31 im Wesentlichen senkrecht zum Faltpaket 16 angeordnet, wobei die Flanschelemente 32 im Querschnitt schräg und seitlich zum Faltpaket 16 angeordnet sind.

Das Faltpaket 16 ist im dargestellten Beispiel in einer strumpfartigen Umhüllung 34 angeordnet. Die Umhüllung 34 weist in Längsrichtung vorzugsweise eine schlitzförmige Öffnung auf, so dass der Entfaltungsabschnitt 22 mit dem Verbindungsabschnitt 23 verbunden werden kann.

In Fig. 2 wird eine weitere Ausführungsform eines erfindungsgemäßen Gassackmoduls 10 in einer perspektivischen Ansicht dargestellt Des Weiteren ist der Halteflansch 35 eines Gasgeneratorträgers 31 zu erkennen, mit dessen Hilfe der Gasgeneratorträger 31 an einem Fahrzeug befestigt werden kann. Die perspektivische Ansicht zeigt des Weiteren die Befestigungsklammer 30 sowie die zugehörigen Flanschelemente 32. Der Gasgenerator 15 weist dargestellt eine längliche Form auf, wobei sich die Längsachse des Gasgenerators 15 in dargestellter Längsrichtung L des Gassackmoduls 10 erstreckt.

In Fig. 2 ist des Weiteren der zu einem Faltpaket 16 gefaltete Entfaltungsabschnitt 22 schematisch dargestellt. Ebenfalls zu erkennen ist die erste Faltlage 25 des Entfaltungsabschnitts 22. Gemäß Ausführungsform der Fig. 2 sind die erste Faltlage 25 des Entfaltungsabschnitts 22 und der Verbindungsabschnitt 23 im Wesentlichen rechtwinklig zueinander angeordnet. Die erste Faltlage 25 des Entfaltungsabschnitts 22 ist indirekt mit einer Übergangsfaltung 26 mit dem Verbindungsabschnitt 23 verbunden. Die Übergangsfaltung weist lediglich zwei Faltbiegungen auf, wobei die erste Faltbiegung 27 entgegengesetzt und parallel zum Verbindungsabschnitt 23 verläuft. Die daran anschließende Faltbiegung 27' ist rechtwinklig zur ersten Faltrichtung ausgebildet und verbindet die erste Faltlage 25 mit der Übergangsfaltung 26.

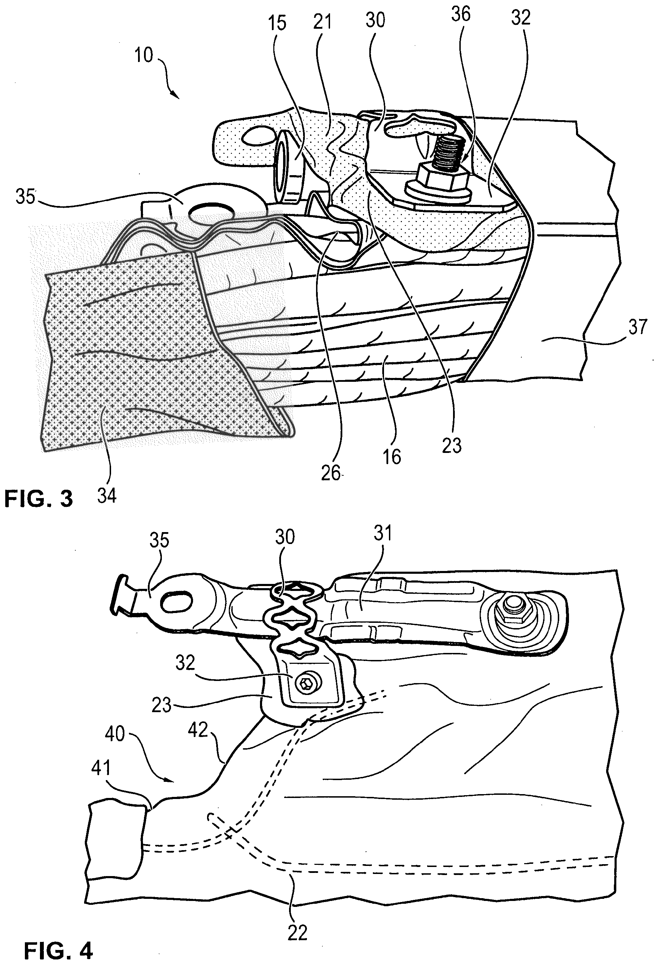

In Fig. 3 wird das in einer strumpfartigen Umhüllung 34 befindliche Faltpaket 16 und der Übergangsbereich des Entfaltungsabschnitts 22 zum Verbindungsabschnitt 23 dargestellt. Ebenfalls sind der Gasgenerator 16 sowie ein Teil der Befestigungsklammer 30 und ein zugehöriges Flanschelement 32 zu erkennen. Zur klemmenden Befestigung des zwischen den Flanschelementen 32 angeordneten Gassacks 20 ist eine Mutter-Schrauben-Verbindung 36 vorgesehen.

Neben der strumpfartigen Umhüllung 34 kann der restliche Teil des Gassacks 20 sowie der Gasgenerator 15 in einer weiteren Umhüllung 37 geschützt angeordnet sein.

In Fig. 4 wird der Gasgeneratorträger 31 mit dem daran befindlichen Halteflansch 35 in einer Draufsicht dargestellt. Bei dem Gasgeneratorträger 31 handelt es sich um ein längliches Blechelement, das eine Wölbung entsprechend der Umfangsfläche 17 des Gasgenerators 15 aufweist. Die Befestigungsklammer 30 umschließt den Gasgeneratorträger 31 und befestigt den Gasgeneratorträger 31 im Umschlingungsabschnitt 21 klemmend am zwischen dem Gasgenerator 16 und dem Gasgeneratorträger 31 befindlichen Gassack 20.

In Fig. 4 ist der Gassack 20 in entfalteter Form dargestellt. Zwischen dem Entfaltungsabschnitt 22 und dem Umschlingungsabschnitt 21 befindet sich der Verbindungsabschnitt 23, wobei am Gassack 20 des Weiteren ein Absatzbereich 40 mit einer Absatzkante 41 ausgebildet ist. Die Verbindung 42 vom Verbindungsabschnitt 23 zur Absatzkante 41 verläuft bogenförmig.

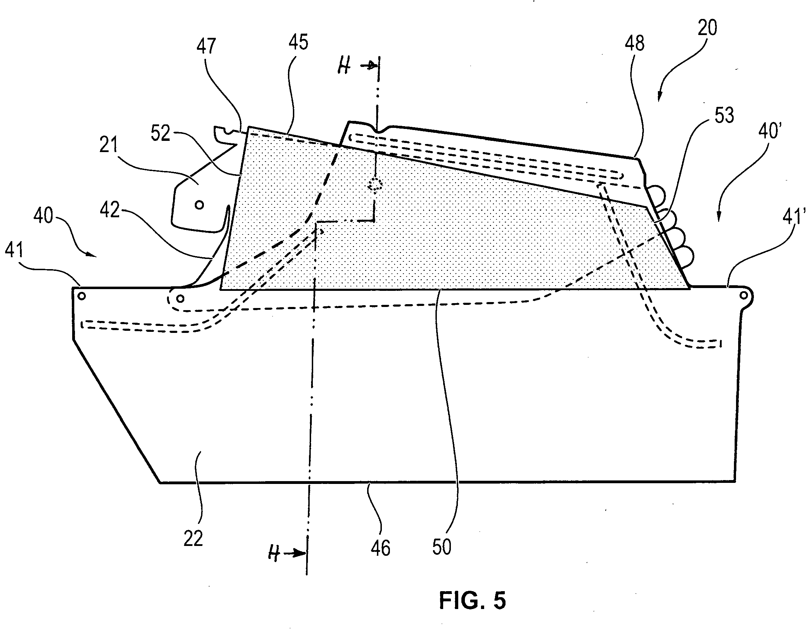

In Fig. 5 ist ein erfindungsgemäßer Gassack 10 im entfalteten Zustand dargestellt. Der Gassack weist eine Oberkante 45 und einen Unterkante 46 auf. Die Oberkante 45 umfasst ein erstes Ende 47 und ein zweites Ende 48, wobei das erste Ende 47 Teil eines Umschlingungsabschnitts 21 ist. Die Unterkante 46 ist als Teil eines Entfaltungsabschnitts 22 ausgebildet. Erfindungsgemäß verlaufen die Oberkante 45 und die Unterkante 46 schräg zueinander.

Die Oberkante 45 und die Unterkante 46 verlaufen vorzugsweise in einem Winkel von 3,0° - 15,0°, insbesondere in einem Winkel von 7,0° - 10,0°, zueinander.

Die Unterkante 46 ist länger als die Oberkante 45 ausgebildet, wobei zwischen der Oberkante 45 und der Unterkante 46 ein Absatzbereich 40 mit einer parallel zur Unterkante 46 ausgebildeten Absatzkante 41 ausgebildet ist. Der Absatzbereich 40 kann sowohl im Bereich des ersten Endes 47 des Gassacks 20 als auch im Bereich des zweiten Endes 48 des Gassacks 20 ausgebildet sein. Die Absatzkante 41 bzw. die Absatzkanten 41 und 41' verlaufen parallel zur Unterkante 46. Die beiden dargestellten Absatzbereiche 40 und 40' bewirken eine Vergrößerung des Entfaltungsabschnitts 22.

Zwischen den beiden Absatzkanten 41 und 41', die auf einer gemeinsamen Achse liegen, ist eine Verlängerung 50 der Absatzkante 41 ausgebildet. Zwischen der Verlängerung 50 der Absatzkante und der Oberkante 45 ist ein keilförmiger Flächenabschnitt 51 mit einer ersten Schräge 52 und einer zweiten Schräge 53 ausgebildet. Die beiden Schrägen 52 und 53 verbinden die Verlängerung 50 der Absatzkante und die Oberkante 45. Die erste Schräge 52 verbindet die Verlängerung 50 der Absatzkante und das erste Ende 47 der Oberkante 45. Die zweite Schräge 53 verbindet die Verlängerung 50 der Absatzkante und das zweite Ende 48 der Oberkante 45. Die erste Schräge 52 ist länger als die zweite Schräge 53 ausgebildet. Somit ist im Bereich des ersten Endes 47 bzw. im Bereich des Umschlingungsabschnitts 21 ein Bereich mit mehr Flächenmaterial gebildet. Dieses Flächenmaterial bzw. zusätzliche Flächenmaterial ist notwendig, um den Verbindungsabschnitt 23 eines Gassackmoduls 10 seitlich und schräg zu einem Faltpaket 16 anordnen zu können.

### Bezugszeichenliste

- 10: Gassackmodul
- 15: Gasgenerator
- 16: Faltpaket
- 17: Umfangsfläche Gasgenerator
- 20: Gassack
- 21: Umschlingungsabschnitt
- 22: Entfaltungsabschnitt
- 23: Verbindungsabschnitt
- 25: erste Faltlage
- 26: Übergangsfaltung
- 27, 27', 27": Faltbiegung
- 30: Befestigungsklammer
- 31: Gasgeneratorträger
- 32: Flanschelement
- 33: Befestigungselement
- 34: Umhüllung
- 35: Halteflansch
- 36: Mutter-Schrauben-Verbindung
- 37: Umhüllung
- 40, 40': Absatzbereich
- 41, 41': Absatzkante
- 42: bogenförmige Verbindung
- 45: Oberkante
- 46: Unterkante
- 47: erstes Ende
- 48: zweites Ende
- 50: Verlängerung der Absatzkante
- 51: keilförmiger Flächenabschnitt
- 52: erste Schräge
- 53: zweite Schräge
- L: Längsrichtung Gassackmodul
- H: Einbauhöhe
- Z1: Entfaltungsrichtung
- α: Winkel zwischen Entfaltungslage und Verbindungsabschnitt

## Patentansprüche

1. Gassackmodul (10), insbesondere für einen Vorhangairbag, umfassend einen Gasgenerator (15) und
einen Gassack (20),
wobei der Gassack (20) einen Umschlingungsabschnitt (21), der den Gasgenerator (15) umschlingt, einen zu einem Faltpaket (16) gefalteten Entfaltungsabschnitt (22) und einen Verbindungsabschnitt (23), der zwischen dem Umschlingungsabschnitt (21) und dem Entfaltungsabschnitt (22) angeordnet ist, umfasst,
wobei der Verbindungsabschnitt (23) bei vertikaler Betrachtung im Einbauzustand des Gassackmoduls (10) zumindest abschnittsweise seitlich des Faltpakets (16) angeordnet ist,
**dadurch gekennzeichnet, dass** der Umschlingungsabschnitt (21) bei vertikaler Betrachtung im Einbauzustand des Gassackmoduls (10) direkt oder indirekt auf dem Faltpaket (16) aufliegt.

2. Gassackmodul (10) nach Anspruch 1, **dadurch gekennzeichnet, dass** der Entfaltungsabschnitt (22) in mehreren Faltlagen, ausgehend von einer ersten Faltlage (25), die direkt oder indirekt mit dem Verbindungsabschnitt (23) verbunden ist, gefaltet, insbesondere zickzack-gefaltet, ist.

3. Gassackmodul (10) nach Anspruch 2, **dadurch gekennzeichnet, dass** die erste Faltlage (25) des Entfaltungsabschnitts (22) und der Verbindungsabschnitt (23) einen Winkel (α) von 90° - 180°, insbesondere von 95° - 175°, einschließen.

4. Gassackmodul (10) nach Anspruch 2, **dadurch gekennzeichnet, dass** die erste Faltlage (25) des Entfaltungsabschnitts (22) und der Verbindungsabschnitt (23) im Wesentlichen rechtwinklig zueinander angeordnet sind.

5. Gassackmodul (10) nach einem der Ansprüche 2 bis 4, **dadurch gekennzeichnet, dass** die erste Faltlage (25) des Entfaltungsabschnitts (22) indirekt mit einer Übergangsfaltung (26) mit dem Verbindungsabschnitt (23) verbunden ist.

6. Gassackmodul (10) nach einem der Ansprüche 1 bis 5, **gekennzeichnet durch** eine Befestigungsklammer (30), die im Umschlingungsabschnitt (21) einen Gasgeneratorträger (31) am Gassack (20) klemmend befestigt.

7. Gassackmodul nach Anspruch 6, **dadurch gekennzeichnet, dass** die Befestigungsklammer (30) zwei Flanschelemente (32) aufweist, die im Verbindungsabschnitt (23) den zwischen den Flanschelementen (32) angeordneten Gassack (20) mittels eines Befestigungselements (33), insbesondere einer Schraube oder eines Niets, klemmend befestigen.

8. Gassackmodul (10) nach einem der vorhergehenden Ansprüche, **dadurch gekennzeichnet, dass** der zu einem Faltpaket (16) gefaltete Entfaltungsabschnitt (22) in einer strumpfartigen Umhüllung (34) angeordnet ist.

9. Gassack (20) eines Gassackmoduls nach einem der vorhergehenden Ansprüche, mit
einer Oberkante (45), die ein erstes Ende (47) und zweites Ende (48) umfasst, wobei das erste Ende (47) Teil eines Umschlingungsabschnitts (21) ist, und mit
einer Unterkante (46), die Teil eines Entfaltungsabschnitts (22) ist, wobei die Oberkante (45) und die Unterkante (46) schräg zueinander verlaufen.

10. Gassack (20) nach Anspruch 9, **dadurch gekennzeichnet, dass** die Oberkante (45) und die Unterkante (46) in einem Winkel von 3,0° - 15,0°, insbesondere von 7,0° - 10,0°, zueinander verlaufen.

11. Gassack (20) nach Anspruch 9 oder 10, **dadurch gekennzeichnet, dass** die Unterkante (46) länger als die Oberkante (45) ist, wobei zwischen der Oberkante (45) und der Unterkante (46) ein Absatzbereich (40, 40') mit einer parallel zur Unterkante (46) ausgebildeteten Absatzkante (41, 41') ausgebildet ist.

12. Gassack (20) nach Anspruch 11, **dadurch gekennzeichnet, dass** zwischen der Verlängerung (50) der Absatzkante (41, 41') und der Oberkante (45) ein keilförmiger Flächenabschnitt (51) mit zwei, die Verlängerung (50) der Absatzkante und die Oberkante (45), verbindenden Schrägen (52, 53) ausgebildet ist, wobei eine erste Schräge (52) die Verlängerung (50) der Absatzkante und das erste Ende (47) der Oberkante und eine zweite Schräge (53) die Verlängerung (50) der Absatzkante und das zweite Ende (48) der Oberkante (45) verbindet, wobei vorzugsweise die erste Schräge (52) länger als die zweite Schräge (53) ist.

## Claims

1. An airbag module (10), in particular for a curtain airbag, comprising a gas generator (15) and
an airbag (20),
wherein the airbag (20) comprises a wrapping portion (21) wrapping the gas generator (15), an unfolding portion (22) folded into a folding package (16) and a connecting portion (23) disposed between the wrapping portion (21) and the unfolding portion (22),
wherein the connecting portion (23), when vertically viewed in the mounted condition of the airbag module (10), is arranged at least in portions on the side of the folding package (16),
**characterized in that** the wrapping portion (21), when vertically viewed in the mounted condition of the airbag module (10), rests directly or indirectly on the folding package (16).

2. The airbag module (10) according to claim 1, **characterized in that** the unfolding portion (22) is folded, especially zigzag folded, in plural folding layers starting from a first folding layer (25) which is connected directly or indirectly to the connecting portion (23).

3. The airbag module (10) according to claim 2, **characterized in that** the first folding layer (25) of the unfolding portion (22) and the connecting portion (23) enclose an angle (α) of from 90° to 180°, especially of from 95° to 175°.

4. The airbag module (10) according to claim 2, **characterized in that** the first folding layer (25) of the unfolding portion (22) and the connecting portion (23) are substantially arranged at right angles relative to each other.

5. The airbag module (10) according to any one of the claims 2 to 4, **characterized in that** the first folding layer (25) of the unfolding portion (22) is indirectly connected to the connecting portion (23) by a transition folding (26).

6. The airbag module (10) according to any one of the claims 1 to 5, **characterized by** a securing clip (30) which in the wrapping portion (21) secures a gas generator support (31) to the airbag (20) by clamping.

7. The airbag module according to claim 6, **characterized in that** the securing clip (30) includes two flange elements (32) which in the connecting portion (23) secure the airbag (20) disposed between the flange elements (32) by clamping by means of a fastener (33), especially a screw or a rivet.

8. The airbag module (10) according to any one of the preceding claims, **characterized in that** the unfolding portion (22) folded into a folding package (16) is arranged is a stocking-type covering (34).

9. An airbag (20) of an airbag module according to any one of the preceding claims, comprising
an upper edge (45) comprising a first end (47) and a second end (48), the first end (47) being part of a wrapping portion (21), and comprising
a lower edge (46) being part of an unfolding portion (22), wherein the upper edge (45) and the lower edge (46) are inclined relative to each other.

10. The airbag (20) according to claim 9, **characterized in that** the upper edge (45) and the lower edge (46) extend at an angle of from 3.0° to 15.0°, especially from 7.0° to 10.0°.

11. The airbag (20) according to claim 9 or 10, **characterized in that** the lower edge (46) is longer than the upper edge (45), wherein between the upper edge (45) and the lower edge (46) a shoulder area (40, 40') having a shoulder edge (41, 41') formed in parallel to the lower edge (46) is formed.

12. The airbag (20) according to claim 11, **characterized in that** between the extension (50) of the shoulder edge (41, 41') and the upper edge (45) a wedge-shaped surface portion (51) having two inclined surfaces (52, 53) connecting the extension (50) of the shoulder edge and the upper edge (45) is formed, wherein a first inclined surface (52) connects the extension (50) of the shoulder edge and the first end (47) of the upper edge and a second inclined surface (53) connects the extension (50) of the shoulder edge and the second end (48) of the upper edge (45), the first inclined surface (52) preferably being longer than the second inclined surface (53).

## Revendications

1. Module airbag (10), en particulier pour airbag rideau comprenant un générateur de gaz (15) et
un sac gonflable (20),
pour lequel le sac gonflable (20) comprend une partie d'enveloppement (21) qui entoure le générateur de gaz (15), une portion de déploiement pliée (22) pour un paquet plié (16) et une partie de liaison (23) qui est disposée entre la partie d'enveloppement (21) et la partie de déploiement (22),
pour lequel la partie de liaison (23) est disposée verticalement en considération de l'état monté du module airbag (10) au moins partiellement du côté de la partie pliée (16),
**caractérisé en ce que** la section d'enveloppement (21) disposée verticalement en considération de l'état monté du module airbag (10) repose directement ou indirectement sur la partie plié (16).

2. Module airbag (10) selon la revendication 1, **caractérisé en ce que** la partie de déploiement (22) est repliée en plusieurs couches de pliage, à partir d'une première couche de pliage (25) qui est relié directement ou indirectement à la partie de liaison (23), et en particulier est pliée en zigzag.

3. Module airbag (10) selon la revendication 2, **caractérisé en ce que** la première couche de pliage (25) de la partie de déploiement (22) et la partie de liaison (23) forment un angle (a) de 90°-180°, en particulier compris entre 95°-175°.

4. Module airbag (10) selon la revendication 2, **caractérisé en ce que** la première couche de pliage (25) de la partie de déploiement (22) et la partie de liaison (23) sont disposées sensiblement perpendiculaires entre elles.

5. Module airbag (10) selon l'une quelconque des revendications 2 à 4, **caractérisé en ce que** la première couche de pliage (25) de la partie déploiement (22) est indirectement reliée par un pli de transition (26) avec la partie de liaison (23).

6. Module airbag (10) selon l'une quelconque des revendications 1 à 5, **caractérisé par** un support de fixation (30) qui dans la partie d'enveloppement (21) maintient serré un support de générateur de gaz (31) sur le sac gonflable (20).

7. Module airbag selon la revendication 6, **caractérisé en ce que** le support de fixation (30) présente deux flasques (32), qui dans la partie de liaison (23) maintiennent serrés le sac gonflable (20) entre les flasques (32) au moyen d'un élément de fixation (33), en particulier au moyen d'une vis de serrage ou un rivet.

8. Module airbag (10) selon l'une quelconque des revendications précédentes, **caractérisé en ce qu'**une partie pliée (16) de la portion de déploiement pliée (22) est disposée en forme de chaussette dans un boîtier (34).

9. Coussin gonflable (20) d'un module airbag selon l'une quelconque des revendications précédentes, avec
un bord supérieur (45) (47) qui comprend une première extrémité et une seconde extrémité (48), pour lequel ladite première extrémité (47) fait partie de la partie d'enveloppement (21), et avec
un bord inférieur (46), faisant partie d'une partie de déploiement (22), pour lequel le bord supérieur (45) et le bord inférieur (46) » s'étendent obliquement l'un par rapport à l'autre.

10. Sac gonflable (20) selon la revendication 9, **caractérisé en ce que** le bord supérieur (45) et le bord inférieur (46) s'étendent l'un par rapport à l'autre avec un angle de 3,0°-15,0°, en particulier de 7,0°-10,0°.

11. Sac gonflable (20) selon la revendication 9 ou 10, **caractérisé en ce que** le bord inférieur (46) est plus long que le bord supérieur (45), pour lequel est disposée entre le bord supérieur (45) et le bord inférieur (46), une partie en épaulement (40, 40') avec un bord d'épaulement (41, 41') parallèle au bord inférieur (46).

12. Sac gonflable (20) selon la revendication 11, **caractérisé en ce qu'**entre le prolongement (50) du bord d'épaulement (41, 41') et le bord supérieur (45) est formé une partie plate en forme de coin (51) avec deux pentes de liaison (52, 53), le prolongement (50) du bord d'épaulement et le bord supérieur (45),
pour lequel une première pente (52) du prolongement (50) du bord d'épaulement et la première extrémité (47) du bord supérieur et une seconde pente (53) du prolongement (50) du bord d'épaulement et la seconde extrémité (48) du bord supérieur (45) sont reliés,
pour lequel la première pente (52) est de préférence plus longue que la seconde pente (53).
